# FASCICULE DE BREVET EUROPEEN

(11) **EP 2 607 646 B1**
(45) Date de publication et mention de la délivrance du brevet: **21.05.2014**
(21) Numéro de dépôt: 12197851.4
(22) Date de dépôt: 18.12.2012
(51) Int. Cl.: F02B 37/24, F02B 37/18, F02M 25/07, F16K 31/04, F16K 31/52, F16K 31/53

(54) **Actionneur de contrôle moteur a mecanisme biellemanivelle**
Aktuator zur Motorsteuerung mit Schubkurbelmechanismus
Actuator for controlling an engine with a crank-bar mechanism

(30) Priorité: 21.12.2011 FR 1162185
(43) Date de publication de la demande: 26.06.2013
(73) Titulaire: Valeo Systèmes de Contrôle Moteur, 95800 Cergy Saint-Christophe (FR)
(72) Inventeur: Ridolfi, Gabriel, 27150 Hacqueville (FR)
(74) Mandataire: Cardon, Nicolas

(56) Documents cités:
- EP-A2- 1 028 249
- WO-A1-02/095209
- WO-A1-2007/059100
- WO-A2-2007/138480
- DE-A1-102007 054 769

## Description

La présente invention concerne le domaine des actionneurs de contrôle pour moteur à combustion interne. De tels actionneurs peuvent être par exemple des actionneurs de vannes de recirculation de gaz d'échappement (EGR pour « Exhaust Gaz Recirculation » en anglais), des actionneurs de régulation de pression de suralimentation à la turbine (« Waste Gate » en anglais) ou au compresseur (« Dump valve » en anglais), des actionneurs de dérivation (« by-pass » en anglais) pour un échangeur ou un dispositif de suralimentation, ou encore des actionneurs commandant tout type de volet, soupape ou clapet situés dans les circuits de gaz d'admission ou de gaz d'échappement d'un moteur à combustion interne.

L'invention a également pour objet un dispositif de régulation de la pression de suralimentation comportant un tel dispositif.

### Etat de la technique

On connaît des actionneurs de contrôle moteur à bielle-manivelle comportant un moteur électrique, hydraulique ou pneumatique agissant sur un secteur denté entraînant en rotation une manivelle. Cette manivelle est liée à une première extrémité d'une bielle de commande, elle même liée à un organe à déplacer linéairement. Le guidage de la bielle de commande est généralement assuré par un palier lisse situé sur l'organe à déplacer linéairement. Ce guidage a pour fonction de reprendre les efforts induits par le mouvement de la manivelle sur la bielle de commande dans des directions autres que celle de la translation de l'organe à déplacer linéairement. Un tel guidage est réalisé par le glissement de surfaces l'une sur l'autre, entraînant des frottements parasites qui provoquent une usure des matériaux et une perte de performance de l'actionneur. Ces frottements sont généralement compensés par un surdimensionnement du moteur destiné à lutter contre les efforts en résultant et par la mise en oeuvre de matériaux d'usure spécifiques. Dans le cas d'une vanne de régulation de la pression de suralimentation dans un moteur à combustion interne, un actionneur de ce type est lié à l'extrémité libre d'une manivelle de manoeuvre d'un papillon ou d'un clapet de la vanne permettant de contourner la turbine d'un turbocompresseur. Un tel dispositif permet de limiter la pression d'admission dans l'enceinte du turbocompresseur et ainsi d'en contrôler sa vitesse de rotation et donc la pression d'admission du turbocompresseur. Lors de son déplacement, l'extrémité de la manivelle de la vanne décrit un arc de cercle ayant pour centre l'axe de rotation du papillon de la vanne. Un tel déplacement rend nécessaire le montage, entre l'organe à déplacer linéairement par l'actionneur et la manivelle de manoeuvre du papillon de la vanne, d'une seconde bielle, dite bielle de manoeuvre, montée pour pivoter en ses deux extrémités. Ce type d'assemblage impose la réalisation de deux liaisons pivots. En raison des jeux nécessaires à leur bon fonctionnement, ces liaisons sont des foyers importants de vibrations qui peuvent se révéler gênantes en termes de sollicitations mécaniques et de bruits. Par ailleurs, la fabrication et les usinages nécessaires à la réalisation de cette bielle de manoeuvre et ses liaisons impactent fortement les coûts de fabrication.

Enfin, la fabrication de l'actionneur à bielle-manivelle lui-même est coûteuse car les frottements induits par le guidage à palier lisse obligent malgré tout à surdimensionner le moteur de l'actionneur et à mettre en oeuvre des matériaux d'usure spécifiques pour la réalisation du palier lisse.

### Objet de l'invention

Un but de l'invention est de réduire les foyers de vibrations et les coûts de réalisation d'un actionneur de contrôle moteur à bielle-manivelle.

### Exposé de l'invention

A cet effet, on prévoit un actionneur de contrôle moteur comportant un moteur électrique solidaire d'un bâti et un mécanisme bielle-manivelle comprenant une manivelle mue par un secteur denté fonctionnellement lié au moteur électrique et une bielle reliée d'une part à la manivelle et d'autre part à un organe à déplacer de manière sensiblement linéaire selon une direction de translation. L'actionneur comprend des moyens de guidage de la bielle suivant sa direction de translation qui comprennent un galet de guidage roulant sur au moins une voie de roulement solidaire du bâti et parallèle à la direction de translation de l'organe à déplacer.

Cet actionneur peut permettre de réguler la pression de suralimentation dans un moteur à combustion interne.

On obtient ainsi un actionneur bielle-manivelle dans lequel le guidage de l'organe à déplacer linéairement fait appel au roulement de deux surfaces l'une sur l'autre et non au frottement de surfaces entre elles. Les efforts parasites de guidage sont donc réduits. Cette réduction permet d'utiliser des matériaux moins coûteux pour réaliser les éléments du guidage et de dimensionner plus justement le moteur de l'actionneur en regard de l'effort final à transmettre à l'organe à déplacer linéairement.

Selon un mode de réalisation particulier appliqué à la commande d'une vanne à papillon ou à clapet, un tel actionneur permet de relier l'organe à déplacer linéairement directement à la manivelle de commande du papillon ou du clapet de la vanne par une unique liaison pivot, rendant inutile l'utilisation d'une bielle de manoeuvre. En effet, le montage de l'organe à déplacer linéairement sur l'arbre autour duquel tourne le galet de roulement de l'actionneur autorise un degré de liberté en rotation de l'extrémité de cet organe qui peut ainsi suivre la trajectoire de la manivelle de la vanne.

Les foyers de vibrations sont réduits grâce à la réduction du nombre de pièces et du nombre de liaisons entre celles-ci. Cette réduction impacte également à la baisse les coûts de fabrication et notamment d'usinage

L'invention concerne également un dispositif de régulation de la pression de suralimentation comportant un actionneur du type précité.

Des modes de réalisation sont définis dans les revendications dépendantes.

D'autres caractéristiques et avantages de l'invention ressortiront à la lecture de la description qui suit de modes de réalisation particuliers non limitatifs de l'invention.

### Brève description des figures

Il sera fait référence aux figures annexées, parmi lesquelles :
- la figure 1 est une vue schématique d'ensemble d'un mode de réalisation particulier du dispositif selon l'invention, l'actionneur selon l'invention fermant une vanne telle qu'une vanne de régulation de la pression de suralimentation;
- la figure 2 est une vue de détail schématique du système de guidage selon le mode de réalisation précèdent ;
- la figure 3 est une vue schématique d'ensemble du mode de réalisation de la figure 1, l'actionneur selon l'invention ouvrant une vanne telle qu'une vanne de régulation de la pression de suralimentation.

### Description détaillée de l'invention

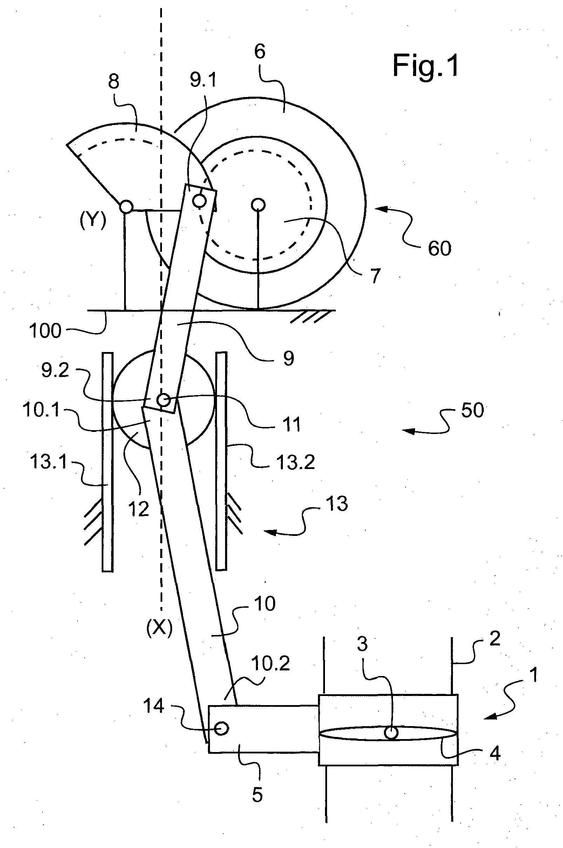

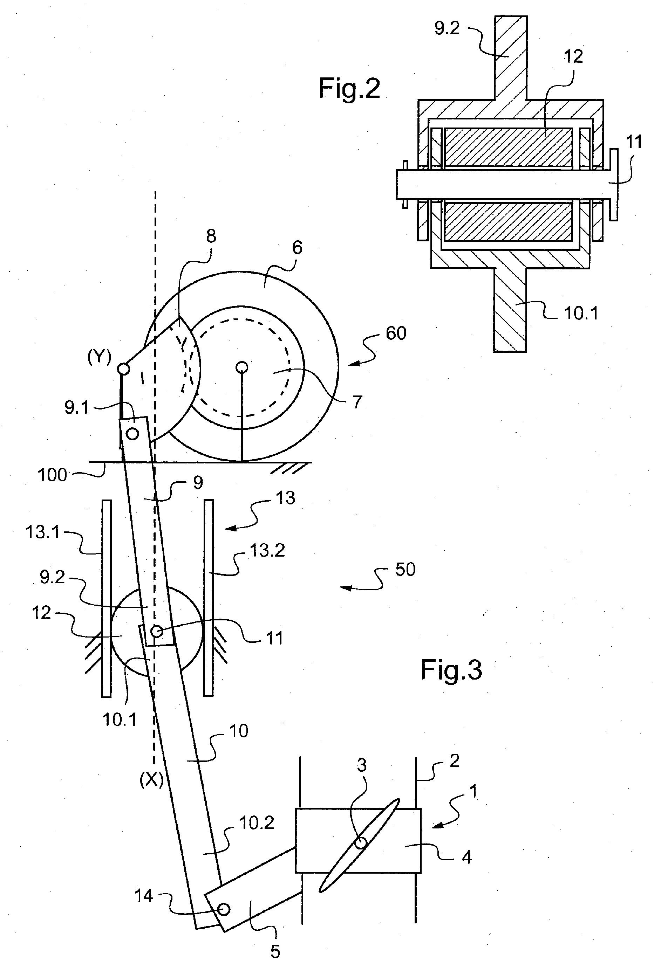

Les figures 1 à 3 représentent un actionneur de contrôle moteur 60 associé à une vanne 8 qui est, dans le présent exemple, une vanne de régulation de la pression de suralimentation. Un tel ensemble forme un dispositif de régulation de pression de suralimentation 50 qui peut être intégré à un moteur à combustion interne.

La vanne 1, connue en elle-même, comprend un corps qui est monté sur une conduite de contournement de la turbine d'un dispositif de suralimentation du véhicule à moteur à combustion interne et qui reçoit à pivotement un arbre 3 porteur d'un papillon 4. L'arbre 3 a une extrémité en saillie du corps de la vanne 1 qui est liée en rotation à une manivelle 5 permettant l'actionnement du papillon 4 depuis l'extérieur du corps. En variante, le papillon 4 peut être remplacé par une soupape ou un clapet.

L'actionneur 60 comprend un moteur électrique 6 solidaire d'un bâti 100. Le moteur électrique 6 entraîne un engrenage composé d'une première roue dentée 7 liée à l'arbre de sortie du moteur électrique 6 et qui engrène avec la denture d'un secteur denté 8 de diamètre supérieur à celui de la roue dentée 7, réalisant ainsi une réduction de la vitesse de rotation du moteur électrique 6. Le secteur denté 8 est monté sur le bâti 100 pour pivoter autour d'un axe de rotation Y parallèle à l'axe de rotation du moteur 6 et est pourvu d'un maneton pour former un plateau manivelle manoeuvrant une bielle de commande 9 se déplaçant selon une direction de translation X qui s'étend dans un plan normal à l'axe de rotation du moteur 6. La bielle de commande 9 est liée en une de ses extrémités 9.1 à un arbre, parallèle à l'axe Y, positionné à proximité de la denture du secteur denté 8 autour duquel la bielle de commande peut pivoter. L'autre extrémité 9.2 de la bielle de commande 9 a un profil en forme de fourche. Les deux branches de cette fourche coopèrent avec un profil similaire plus étroit réalisé en une première extrémité 10.1 de l'organe à déplacer linéairement, ici une tige de manoeuvre 10. Un arbre 11 coopère avec un alésage réalisé au travers des branches des fourches des extrémités 9.2 de la bielle de commande 9 et 10.1 de la tige de manoeuvre 10, réalisant ainsi une liaison pivot d'axe parallèle à l'axe Y entre ces deux éléments. Un galet de guidage 12 est monté sur l'arbre 11 entre les fourches des extrémités 9.2 de la bielle de commande 9 et 10.1 de la tige de manoeuvre 10. Avantageusement le galet de guidage 12 est un roulement à billes dont la cage extérieure fait office de bande de roulement. Ce galet de guidage 12 roule sur une voie de roulement 13 liée au bâti 100. Cette voie est constituée, ici, de deux surfaces planes 13.1 et 13.2 s'étendant parallèlement à un plan contenant la direction de translation X et parallèle à l'axe de rotation Y du secteur denté 8. La distance séparant les deux surfaces 13.1 et 13.2 comprend un jeu de fonctionnement adapté au roulement du galet de guidage 12 sur une seule des deux surfaces lors de son déplacement. La jonction de l'extrémité 10.2 de la tige de manoeuvre 10 avec la manivelle 5 de la vanne papillon 1 est une liaison pivot 14 qui autorise une inclinaison de la tige 10 relativement à la manivelle 5 autour d'un axe parallèle à l'axe transversal Y. Cette liaison est réalisée par des moyens connus de l'homme du métier tel qu'un arbre épaulé traversant les deux pièces 10 et 5.

En fonctionnement, le déplacement de l'extrémité de la manivelle 5 liée à l'extrémité 10.2 de la tige de manoeuvre 10 se fait selon un arc de cercle dont le centre se situe sur l'axe de l'arbre 3. Lorsqu'une tension est appliquée aux bornes du moteur électrique 6, la rotation de l'arbre de sortie du moteur 6 entraîne la rotation du secteur denté 8 avec un rapport de réduction de vitesse équivalent au rapport des diamètres de la roue dentée 7 et du secteur denté 8. La rotation du secteur denté 8 entraîne le déplacement de l'extrémité 9.2 de la bielle de commande 9. Le galet de guidage 12 lié à cette extrémité roule sur une des surfaces de la voie de roulement 13 assurant un guidage suivant la direction de translation X de l'extrémité 9.2 de la bielle de commande, elle-même liée à l'extrémité 10.1 de la tige de commande 10. Lors du déplacement de la tige 10, son extrémité 10.2 liée à la manivelle 5 se déplace selon la direction de translation X mais également selon une direction comprise dans un plan normal à cette direction X. Ce déplacement est rendu possible par le pivot d'axe parallèle à Y, réalisé par l'arbre 11 entre la bielle de manoeuvre 9 et la tige de commande 10.

On obtient donc un guidage de la tige de commande 10 faisant appel au roulement du galet de guidage 12 sur l'une ou l'autre des voies de roulement 13. Ce guidage autorise un degré de liberté en rotation de la tige 10 relativement à la bielle 9 autour d'un axe parallèle à l'axe Y de rotation du secteur denté 8. Ce degré de liberté est avantageusement mis à profit dans le cas d'un actionneur lié au papillon ou au clapet d'une vanne de régulation de la pression de suralimentation car il permet de supprimer la bielle de manoeuvre nécessaire dans les solutions de l'art antérieur et ainsi de réduire les coûts de production d'un tel équipement.

Bien entendu, l'invention n'est pas limitée aux modes de réalisation décrits mais englobe toute variante entrant dans le champ de l'invention telle que définie par les revendications. En particulier,
- bien que la réduction de la rotation de l'arbre de sortie du moteur 6 soit faite par un unique engrenage, l'invention s'applique également à une réduction réalisée par un train d'engrenage constitué de plusieurs roues dentées successives ;
- bien que le guidage de la tige 10 soit réalisé par un galet de guidage 12 roulant sur une voie de roulement 13 comprenant deux surfaces de roulement, l'invention s'applique également à une voie de roulement comprenant une unique surface de roulement ;
- bien que les extrémités en liaison de l'organe à déplacer linéairement, ici une tige 10, et de la bielle de commande 9 aient un profil en fourche, l'invention s'applique également à d'autres jonctions comme par exemple une jonction plat sur plat.

## Revendications

1. Actionneur de contrôle moteur (60) comportant un moteur électrique (6) solidaire d'un bâti (100) et un mécanisme bielle-manivelle comprenant une manivelle mue par un secteur denté (8) fonctionnellement lié au moteur électrique (6) et une bielle (9) reliée d'une part à la manivelle et d'autre part à un organe à déplacer de manière sensiblement linéaire (10) selon une direction de translation (X), **caractérisé en ce que** l'actionneur (60) comprend des moyens de guidage (12, 13) de la bielle (9) suivant sa direction de translation (X) qui comprennent un galet de guidage (12) roulant sur au moins une voie de roulement (13) solidaire du bâti (100) et parallèle à la direction de translation (X) de l'organe à déplacer (10).

2. Actionneur (60) selon la revendication 1, dans lequel la voie de roulement (13) du galet de guidage (12) comprend deux surfaces (13.1, 13.2) s'étendant de part et d'autre du galet de guidage (12).

3. Actionneur selon la revendication 1, dans lequel l'organe à déplacer (10) actionne une manivelle (5) d'actionnement d'une vanne (1).

4. Dispositif de régulation de la pression de suralimentation dans un moteur à combustion interne comprenant :
- une vanne (1), et
- un actionneur (60) conforme à l'une quelconque des revendications précédentes, pilotant l'ouverture de la vanne (1).

## Patentansprüche

1. Aktuator (60) zur Motorsteuerung, der einen mit einem Gestell (100) fest verbundenen Elektromotor (6) und einen Schubkurbelmechanismus, der eine durch ein Zahnsegment (8), das mit dem Elektromotor (6) wirkverbunden ist, bewegte Kurbel und eine Pleuelstange (9), die einerseits an der Kurbel und andererseits an einem in einer Translationsrichtung (X) im Wesentlichen linear zu verschiebenden Glied (10) befestigt ist, umfasst, enthält, **dadurch gekennzeichnet, dass** der Aktuator (60) Mittel (12, 13) zur Führung der Pleuelstange (9) in ihrer Translationsrichtung (X) umfasst, die eine Führungsrolle (12) umfassen, die auf mindestens einer mit dem Gestell (100) fest verbundenen und zur Translationsrichtung (X) des zu verschiebenden Glieds (10) parallelen Rollbahn (13) rollt.

2. Aktuator (60) nach Anspruch 1, wobei die Rollbahn (13) der Führungsrolle (12) zwei Flächen (13.1, 13.2) umfasst, die sich auf beiden Seiten der Führungsrolle (12) erstrecken.

3. Aktuator nach Anspruch 1, wobei das zu verschiebende Glied (10) eine Kurbel (5) zur Betätigung eines Ventils (1) betätigt.

4. Vorrichtung zur Steuerung des Aufladedrucks in einem Verbrennungsmotor, die Folgendes umfasst:
- ein Ventil (1), und
- einen Aktuator (60) nach einem der vorhergehenden Ansprüche, der das Öffnen des Ventils (1) steuert.

## Claims

1. Engine control actuator (60) comprising an electric motor (6) secured to a frame (100) and a connecting rod-crank mechanism comprising a crank moved by a toothed sector (8) functionally connected to the electric motor (6) and a connecting rod (9) connected, on the one hand, to the crank and, on the other hand, to a member (10) to be moved in a substantially linear manner in a translation direction (X), **characterized in that** the actuator (60) comprises means (12, 13) for guiding the connecting rod (9) in its translation direction (X) which comprise a guide roller (12) rolling on at least one rolling track (13) secured to the frame (100) and parallel to the translation direction (X) of the member (10) to be moved.

2. Actuator (60) according to Claim 1, in which the rolling track (13) of the guide roller (12) comprises two surfaces (13.1, 13.2) extending on either side of the guide roller (12).

3. Actuator according to Claim 1, in which the member (10) to be moved actuates a crank (5) for actuating a valve (1).

4. Device for regulating the boost pressure in an internal combustion engine comprising:
- a valve (1), and
- an actuator (60) according to any one of the preceding claims, controlling the opening of the valve (1).
